# EUROPÄISCHE PATENTSCHRIFT

(11) **EP 0 321 047 B1**
(45) Veröffentlichungstag und Bekanntmachung des Hinweises auf die Patenterteilung: **04.05.1994**
(21) Anmeldenummer: 88202858.2
(22) Anmeldetag: 13.12.1988
(51) Int. Cl.: H01G 9/00, H01G 9/08, H01G 9/06

(54) **Elektrolytkondensator und Verfahren zur Herstellung eines Elektrolytkondensators**
Electrolytic capacitor and its manufacture
Condensateur électrolytique et son procédé de fabrication

(30) Priorität: 17.12.1987 AT 3339/87
(43) Veröffentlichungstag der Anmeldung: 21.06.1989
(73) Patentinhaber: Philips Electronics N.V., 5621 BA Eindhoven (NL)
(72) Erfinder: Schmickl, Helfried, NL-5656 AA Eindhoven (NL)
(74) Vertreter: Pennings, Johannes

(56) Entgegenhaltungen:
- DE-A- 3 412 492
- DE-B- 1 194 058
- US-A- 3 553 537

## Beschreibung

Die Erfindung betrifft einen Elektrolytkondensator mit einem einen Aufnahmeraum für eine Kondensatorzelle bildenden Gehäuse aus Kunststoff, das aus einem schalenförmigen, die seitliche Elektrodenanschlüsse aufweisende Kondensatorzelle im wesentlichen aufnehmenden Gehäuseteil 1 und einem diesen schalenförmigen Gehäuseteil dichtend abschliessenden deckelförmigen Gehäuseteil besteht, wobei in die den Elektrodenanschlüssen der Kondensatorzelle benachbarten Seitenwände des schalenförmigen Gehäuseteiles Anschlussleitungen eingebettet sind, die von ausserhalb des schalenförmigen Gehäuseteiles kommend, mit einem Ende mit dem benachbarten Elektrodenanschlus der Kondensatorzelle verbunden sind, und die mindestens abschnittsweise, in Richtung vom Boden des schalenförmigen Gehäuseteiles weg, im wesentlichen parallel zur Kondensatorzelle verlaufen wobei die in den Aufnahmeraum für die Kondensatorzelle austretenen, mit den benachbarten Elektrodenanschlüssen der Kondensatorzelle verbundenen Enden der Anschlussleitungen zu der vom Boden des schalenförmigen Gehäuseteiles abgewandten Fläche der Kondensatorzelle hin L-förmig abgewinkelt sind, ohne sich dabei gegenseitig zu kontaktieren. Die Erfindung betrifft auch ein Verfahren zur Herstellung eines Elektrolytkondensators.

Ein derartiger Kondensator ist bekannt aus DE 11 94 058. In dem bekannten Kondensator sind die Anschlussleitungen in der Wandung eines Kunststoffgehäuses eingebettet, und durchdringen sie in ihrer ganze Höhe. Damit wird mit Sicherheit vermieden, dass bei diesem Elekrolytkondensator Elektrolyt an die Verbindungsstelle zwischen dem inneren, aus Ventilmetall bestehenden Wickelanschluss und der äusseren, lötfähigen Anschlussleitung bzw. an diese selbst gelangen kann.

In dem bekannten Kondensator wird jedoch die Kondensatorzelle nicht sicher im schalenförmigen Gehäuseteil gehalten. Dies ist insbesondere nachteilig wenn der Kondensator Vibrationen ausgesetzt wird.

Die Erfindung hat zum Ziel dieser Nachteil zu beseitigen. Erfindungsgemäss ist hierzu vorgesehen, dass die zur Kondensatorzelle hin L-förmig abgewinkelten Enden der Anschlussleitungen zusammen mit den mit ihnen verbundenen Elektrodenanschlüssen an der Kondensatorzelle anliegen, und diese gegen den Boden des schalenförmigen Gehäuseteiles drücken. Durch ein solches Andrücken der Kondensatorzelle an den Boden des schalenförmigen Gehäuseteiles wird die Kondensatorzelle sicher im schalenförmigen Gehäuseteil gehalten und auch vor Vibrationen geschützt, denen der Elektrolytkondensator ausgesetzt sein kann, wodurch ebenfalls die Lebensdauer des Elektrolytkondensators verlängert wird.

Eine andere, in der sogenannten Chip-Bauweise ausgeführten Elektrolytkondensator, wie er beispielsweise zur Oberflächenmontage auf Leiterplatten verwendet wird, ist aus der Offenlegungsschrift WO 85/00463 bekannt. Bei diesem bekannten Elektrolytkondensator sind die in die Seitenwände des schalenförmigen Gehäuseteiles eingebetteten Anschlußleitungen quer durch die Seitenwände hindurchgeführt, was zur Folge hat, daß die Anschlußleitungen nur entlang eines relativ kurzen Abschnittes in die Seitenwände des schalenförmigen Gehäuseteiles eingebettet sind. Eine derartige Einbettung der Anschlußleitungen entlang eines nur relativ kurzen, der Wandstärke der Seitenwände entsprechenden Abschnittes ergibt Schwierigkeiten hinsichtlich der Abdichtung des Gehäuses im Bereich der Einbettung der Anschlußleitungen in dasselbe, dies im Zusammenhang mit der Gefahr eines Austretens des sich im Aufnahmeraum für die Kondensatorzelle befindenden Elektrolyten entlang dieser Einbettungen der Anschlußleitungen in das Gehäuse. Ein solches Austreten des Elektrolyten aus dem Gehäuse würde zu einer Beeinträchtigung der Funktionsweise beziehungsweise Verringerung der Lebensdauer des Elektrolytkondensators führen.

Es sei an dieser Stelle erwähnt, daß aus der JP-OS 60-177.612 ein Elektrolytkondensator bekannt ist, bei dem das Gehäuse durch zwei schalenförmige Gehäuseteile gebildet ist, welche die hier als Kondensatorwickel ausgebildete Kondensatorzelle im wesentlichen etwa je zur Hälfte aufnehmen, wodurch sich relativ niedrige Seitenwände der schalenförmigen Gehäuseteile ergeben. In diese Seitenwände eines der beiden schalenförmigen Gehäuseteile sind Anschlußleitungen eingebettet, die in Richtung vom Boden des schalenförmigen Gehäuseteiles weg, parallel zu den benachbarten Stirnflächen des Kondensatorwickels verlaufen und an der Oberseite der Seitenwände in den Aufnahmeraum für den Kondensatorwickel austreten, wo sie dann im Bereich der etwa mittig aus den Stirnflächen des Kondensatorwickels austretenden Elektrodenanschlüsse, an der Oberseite der Seitenwände anliegend, zu diesen Elektrodenanschlüssen hin abgewinkelt und mit ihnen verbunden sind. Dadurch, daß die Seitenwände dieses schalenförmigen Gehäuseteiles nur relativ geringe Hohe aufweisen, da sie nur bis etwa zur Mitte des Kondensatorwickels reichen, sind die Anschlußleitungen, ebenso wie bei dem in der eingangs angeführten Offenlegungsschrift WO 85/00463 angegebenen Elektrolytkondensator, auch nur entlang relativ kurzer Abschnitte in die Seitenwände eingebettet, wodurch sich wieder ein nur relativ kurzer Kriechweg für den sich im Aufnahmeraum für den Kondensatorwickel befindenden Elektrolyten ergibt, was wieder zu Schwierigkeiten hinsichtlich einer einwandfreien Abdichtung des Gehäuses führt. Demgegenüber sind erfindungsgemäß die Anschlußleitungen in die relativ hohen Seitenwände des einen schalenförmigen Gehäuseteiles, der die Kondensatorzelle im wesentlichen zur Gänze aufnimmt, eingebettet, wodurch sich demgemäß relativ lange Kriechwege für den sich im Aufnahmeraum für den Kondensatorwickel befindenden Elektrolyten ergeben und damit eine gute und einwandfreie Abdichtung des Gehäuses erhalten wird.

Hinsichtlich einer sehr guten Abdichtung des Gehäuses der erfindungsgemäss Kondensator hat sich als vorteilhaft erwiesen, wenn die Anschlußleitungen im Bereich ihrer in den schalenförmigen Gehäuseteil eingebetteten Abschnitte in ihrem Verlauf mindestens eine Abbiegung aufweisen. Gegenüber einem geradlinigen Verlauf der in den schalenförmigen Gehäuseteil eingebetteten Abschnitte der Anschlußleitungen wird durch das Vorsehen mindestens einer Abbiegung im Verlauf der eingebetteten Abschnitte der Anschlußleitungen sowohl eine längere Einbettungsstrecke für die Anschlußleitungen und damit ein längerer Kriechweg für den sich im Aufnahmeraum für die Kondensatorzelle befindenden Elektrolyten als auch eine festerere und sicherere Einbettung der Anschlußleitungen erhalten, was sich beides vorteilhaft auf die Abdichtung des Gehäuses des Elektrolytkondensators auswirkt. Für die Ausbildung einer derartigen Abbiegung im Verlauf der eingebetteten Abschnitte der Anschlußleitungen oder mehrerer solcher Abbiegungen stehen dabei verschiedene Möglichkeiten zur Verfügung. So können die Anschlußleitungen im Bereich ihrer eingebetteten Abschnitte beispielsweise zickzackförmige, mäanderförmige oder wellenförmige Abbiegungen aufweisen.

In diesem Zusammenhang hat sich weiters als vorteilhaft erwiesen, wenn die Anschlußleitungen im Bereich des Bodens des schalenförmigen Gehäuseteiles eine im wesentlichen als Abwinkelung ausgebildete Abbiegung aufweisen, mit deren abgewinkeltem Abschnitt sie aus der Seitenwand des schalenförmigen Gehäuseteiles an deren Außenseite austreten. Auf diese Weise wird ebenfalls eine sehr sichere Einbettung der Anschlußleitungen in die Seitenwände des schalenförmigen Gehäuseteiles und auch eine Verlängerung der eingebetteten Abschnitte der Anschlußleitungen und somit eine sehr gute Abdichtung des Gehäuses des Elektrolytkondensators erhalten.

Hinsichtlich einer sehr guten Abdichtung des Gehäuses hat sich bei einem Elektrolytkondensator, der streifenförmig ausgebildete Anschlußleitungen aufweist, auch als vorteilhaft erwiesen, wenn die Anschlußleitungen im Bereich ihrer in den schalenförmigen Gehäuseteil eingebetteten Abschnitte mit mindestens einer sich quer zur Streifenebene erstreckenden Ausnehmung versehen sind, welche in ihrem Bereich die Querschnittsfläche der Anschlußleitungen herabsetzt. Hiedurch wird eine besonders sichere Verankerung der in den schalenförmigen Gehäuseteil eingebetteten Anschlußleitungen erhalten und dabei einer Bildung von entlang der Einbettungen der Anschlußleitungen verlaufenden Spalten zufolge unterschiedlicher Schrumpfungs- und Ausdehnungsverhalten des Gehäuses und der Anschlußleitungen vorgebeugt.

Hinsichtlich einer sehr guten Abdichtung des Gehäuses hat sich bei einem Elektrolytkondensator, der streifenförmig ausgebildete Anschlußleitungen aufweist, ebenfalls als vorteilhaft erwiesen wenn die Anschlußleitungen im Bereich ihrer in den schalenförmigen Gehäuseteil eingebetteten Abschnitte mit mindestens einer sich quer zur Streifenebene erstreckenden Einbuchtung versehen sind. Hiedurch wird ebenfalls eine sichere Verankerung der in den schalenförmigen Gehäuseteil eingebetteten Anschlußleitungen erhalten.

Hinsichtlich einer sehr guten Abdichtung des Gehäuses hat sich bei einem Elektrolytkondensator, bei dem mindestens die in den Aufnahmeraum für die Kondensatorzelle austretenden Anschlußleitungen aus einem Ventilmetall bestehen, weiters als vorteilhaft erwiesen, wenn die aus einem Ventilmetall bestehenden Anschlußleitungen mindestens im Bereich ihrer in den schalenförmigen Gehäuseteil eingebetteten Abschnitte mindestens teilweise an ihrer Oberfläche mit einer sie umfangsseitig umfassenden Sperrschicht versehen sind. Auf diese Weise wird eine Oberflächenausbildung der Anschlußleitungen erhalten, die im Zusammenwirken mit dem Kunststoffmaterial des schalenförmigen Gehäuseteiles verbesserte Hafteigenschaften aufweist, wodurch sich ebenfalls eine sicherere Einbettung der Anschlußleitungen in den schalenförmigen Gehäuseteil ergibt. Weiters werden die elektrokapillaren Kräfte, welche einen Elektrolytaustritt im Bereich der anodenseitigen Anschlußleitung der Kondensatorzelle begünstigen, herabgesetzt, wodurch ebenfalls eine Verbesserung der Abdichtung des Gehäuses des Elektrolytkondensators erhalten wird.

In diesem Zusammenhang hat sich als vorteilhaft erwiesen, wenn die Sperrspannung der Sperrschicht höher gewählt ist als die Spannung, mit der die Kondensatorzelle entsprechend ihrer Betriebsspannung formiert wird. Auf diese Weise werden die elektrokapillaren Kräfte, welche einen Elektrolytaustritt im Bereich der anodenseitigen Anschlußleitung der Kondensatorzelle begünstigen, praktisch vollkommen aufgehoben, wodurch eine weitere Verbesserung der Abdichtung des Gehäuses des Elektrolytkondensators erhalten wird.

Hinsichtlich einer besonders guten Abdichtung des Gehäuses hat sich als besonders vorteilhaft erwiesen, wenn die Anschlußleitungen mindestens im wesentlichen im Bereich ihrer in den schalenförmigen Gehäuseteil eingebetteten Abschnitte von mindestens einem an den Anschlußleitungen fest haftenden, sie umfangsseitig ringförmig umfassenden, aus einem Kunstharz bestehenden Dichtungselement umgeben sind. Auf diese Weise wird weitgehendst unabhängig von der Materialwahl für das Gehäuse eine besonders sichere Abdichtung rund um die in den schalenförmigen Gehäuseteil eingebetteten Anschlußleitungen erhalten.

In diesem Zusammenhang hat sich als sehr vorteilhaft erwiesen, wenn das Dichtungselement aus einem wärmebeständigen, elastisch nachgiebigen Kunstharz besteht. Auf diese Weise können die unterschiedlichen Schrumpfungs- und Ausdehnungsverhalten des Gehäuses und der Anschlußleitungen besonders sicher ausgeglichen werden. Als Material für das Dichtungselement kann hiebei vorzugsweise ein Silikonkautschuk verwendet werden.

In diesem Zusammenhang hat sich weiters als vorteilhaft erwiesen, wenn mindestens ein eine Anschlußleitung umgebendes Dichtungselement vollständig in den schalenförmigen Gehäuseteil eingebettet ist. Auf diese Weise wird eine besonders gute Abdichtung des Gehäuses erhalten.

In diesem Zusammenhang hat sich aber auch als vorteilhaft erwiesen, wenn mindestens ein eine Anschlußleitung umgebendes Dichtungselement unmittelbar anschließend an den in den schalenförmigen Gehäuseteil eingebetteten Abschnitt der Anschlußleitung, an mindestens einer ihrer beiden Austrittsstellen aus dem schalenförmigen Gehäuseteil, an denselben angrenzend, angeordnet ist. Auch eine derartige Maßnahme ergibt eine sehr gute Abdichtung des Gehäuses. Ein solches Dichtungselement kann dabei entweder an der in den Aufnahmeraum für die Kondensatorzelle mündenden Austrittsstelle einer Anschlußleitung aus dem schalenförmigen Gehäuseteil oder an ihrer in Bezug auf das Gehäuse nach außen führenden Austrittsstelle vorgesehen werden. Falls erwünscht, können aber auch an beiden Austrittsstellen einer Anschlußleitung aus dem schalenförmigen Gehäuseteil solche Dichtungselemente angeordnet werden.

Weiters betrifft die Erfindung ein Verfahren zur Herstellung eines Elektrolytkondensators, bei dem in die Seitenwände eines schalenförmig ausgebildeten Gehäuseteiles von außerhalb desselben kommende Anschlußleitungen eingebettet werden, von denen ein Ende in den für eine Kondensatorzelle bestimmten Aufnahmeraum austritt, wonach die mit seitlichen Elektrodenanschlüssen versehene Kondensatorzelle mit diesen Elektrodenanschlüssen benachbart zu den in den für die Kondensatorzelle bestimmten Aufnahmeraum austretenden Enden der Anschlußleitungen in den schalenförmigen Gehäuseteil eingesetzt wird und die Elektrodenanschlüsse mit diesen Enden der Anschlußleitungen verbunden werden und anschließend ein deckelförmiger Gehäuseteil auf den schalenförmigen Gehäuseteil aufgesetzt und dichtend mit diesem verbunden wird. Ein derartiges Verfahren zur Herstellung eines Elektrolytkondensators ist ebenfalls aus der eingangs angeführten Offenlegungsschrift WO 87/00463 bekannt. Da bei diesem bekannten Elektrolytkondensator die Anschlußleitungen die Seitenwände des schalenförmigen Gehäuseteiles quer durchsetzen und im Inneren des Aufnahmeraumes für die hier als Kondensatorstapel ausgebildete Kondensatorzelle enden, müssen die im vorliegenden Fall aus dem Kondensatorstapel seitlich austretenden Elektrodenanschlüsse im Inneren des Aufnahmeraumes für den Kondensatorstapel mit den Enden der Anschlußleitungen verbunden werden, was einen relativ komplizierten Arbeitsvorgang erforderlich macht.

Die Erfindung hat sich zum Ziel gesetzt, ein wie im vorstehenden beschriebenes Verfahren zu vereinfachen. Erfindungsgemäß geschieht dies dadurch, daß die Anschlußleitungen mindestens abschnittsweise, in Richtung vom Boden des schalenförmigen Gehäuseteiles weg, im wesentlichen parallel zu dessen Seitenwänden verlaufend in dieselben eingebettet werden, daß dabei ihre in den für die Kondensatorzelle bestimmten Aufnahmeraum austretenden Enden so lang ausgebildet sind, daß sie im wesentlichen parallel zu den Seitenwänden verlaufend bis über den schalenförmigen Gehäuseteil hinausragen, daß danach die Kondensatorzelle mit ihren seitlichen, parallel zur Kondensatorzelle verlaufend abgewinkelten Elektrodenanschlüssen in den schalenförmigen Gehäuseteil eingesetzt wird, wonach ihre Elektrodenanschlüsse außerhalb des schalenförmigen Gehäuseteiles im Bereich der über den schalenförmigen Gehäuseteil hinausragenden Enden der Anschlußleitungen mit diesen verbunden werden, und daß anschließend diese über den schalenförmigen Gehäuseteil hinausragenden Enden der Anschlußleitungen zusammen mit den mit ihnen verbundenen Elektrodenanschlüssen der Kondensatorzelle zu der vom Boden des schalenförmigen Gehäuseteiles abewandten Fläche der Kondensatorzelle hin L-förmig abgewinkelt werden, ohne sich dabei gegenseitig zu kontaktieren und die vom Boden des schalenförmigen Gehäuseteiles abgewandte Fläche der Kondensatorzelle angedrückt werden und so die Kondensatorzelle an den Boden des schalenförmigen Gehäuseteiles angedrückt gehalten wird. Auf diese Weise ist gewährleistet, daß die Kondensatorzelle im Gehäuse sicher gehalten und vor allfälligen Vibrationen geschützt ist. wonach auf den schalenförmigen Gehäuseteil der deckelförmige Gehäuseteil aufgesetzt und die beiden Gehäuseteile dichtend miteinander verbunden werden. Auf diese Weise ist erreicht, daß die Verbindung der Enden der Anschlußleitungen mit den Elektrodenanschlüssen der Kondensatorzelle vollständig außerhalb des schalenförmigen Gehäuseteiles durchgeführt werden kann, wodurch in einem einfachen Herstellungsvorgang besonders sichere Verbindungen erreichbar sind, was für eine einwandfreie Funktionsweise des Elektrolytkondensators sehr wichtig ist. Selbst wenn sich bereits ein Elektrolyt im Aufnahmeraum für die Kondensatorzelle befindet, bevor die Verbindung der Enden der Anschlußleitungen mit den Elektrodenanschlüssen der Kondensatorzelle vorgenommen wird, ist dadurch, daß diese Verbindungen vollständig außerhalb der Gehäuseschale vorgenommen werden, sichergestellt, daß praktisch kein Elektrolyt in den Bereich der miteinander zu verbindenden Teile kommen kann, was andernfalls bekanntlich die Güte der Verbindungen beeinträchtigen könnte.

Es sei an dieser Stelle erwähnt, daß bei dem aus der bereits im vorstehenden erwähnten JP-OS 60-177.612 bekannten Elektrolytkondensator die Verbindung der Enden der Anschlußleitungen mit den Elektrodenanschlüssen der Kondensatorzelle unmittelbar an der Oberseite der Seitenwände der einen schalenförmigen Gehäusehälfte vorgenommen wird, wobei die Elektrodenanschlüsse auf den an der Oberseite der Seitenwände der schalenförmigen Gehäusehälfte anliegenden, abgewinkelten Enden der Anschlußleitungen aufliegen. Dies bedeutet, daß die Verbindung der Elektrodenanschlüsse mit den Enden der Anschlußleitungen nur von einer Seite her vorgenommen werden kann, wodurch aber die Sicherheit der Verbindungen beeinträchtigt werden kann. Außerdem besteht die Gefahr, daß ein sich gegebenenfalls bereits im Aufnahmeraum für die Kondensatorzelle befindender Elektrolyt auf die Oberseite der Seitenwände des schalenförmigen Gehäuseteiles und damit in den Bereich der miteinander zu verbindenden Elektrodenanschlüsse mit den Enden der Anschlußleitungen gelangt, was die Sicherheit dieser Verbindungen, wie bereits erwähnt, ebenfalls beeinträchtigen würde. Demgegenüber wird bei dem erfindungsgemäßen Verfahren die Verbindung der Enden der Anschlußleitungen mit den Elektrodenanschlüssen der Kondensatorzelle vollständig außerhalb des schalenförmigen Gehäuseteiles vorgenommen, dort wo die miteinander zu verbindenden Teile beidseitig zugänglich sind, so daß die beispielsweise zur Herstellung der Verbindungen zangenartig unfaßt werden können, wodurch sehr sichere Verbindungen erhalten werden. Außerdem besteht dabei keine Gefahr, daß ein sich gegebenenfalls bereits im Aufnahmeraum für die Kondensatorzelle befindender Elektrolyt bis in den Bereich der miteinander zu verbindenden Elektrodenanschlüsse mit den Enden der Anschlußleitungen gelangen kann. Auf diese Weise ist daher die Verbindung der Enden der Anschlußleitungen mit den Elektrodenanschlüssen der Kondensatorzelle besonders sicher und einfach herzustellen.

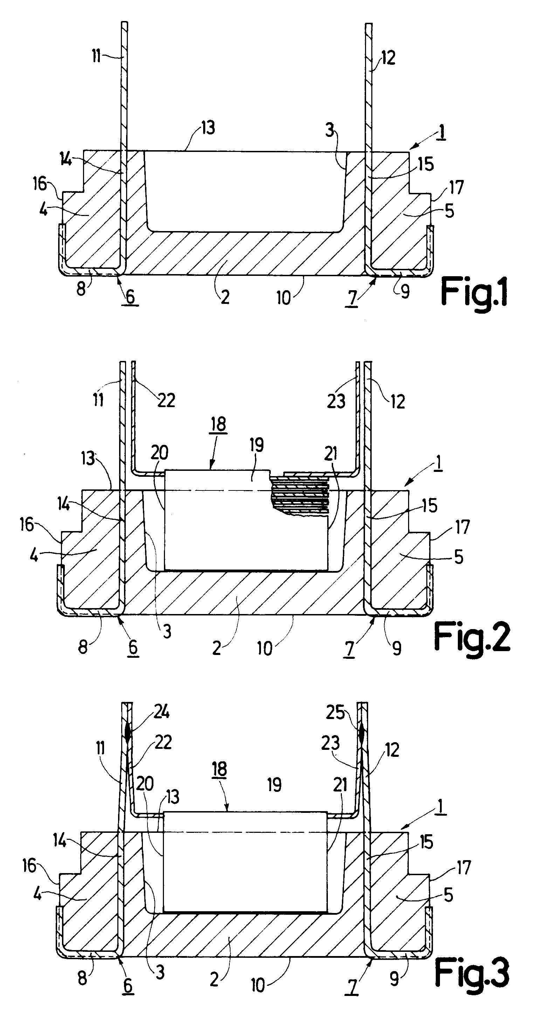

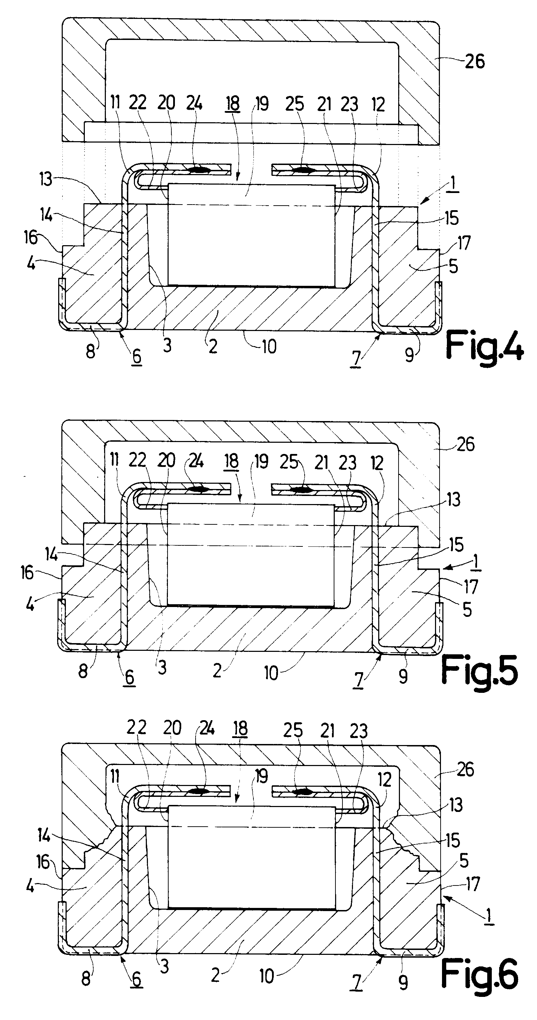

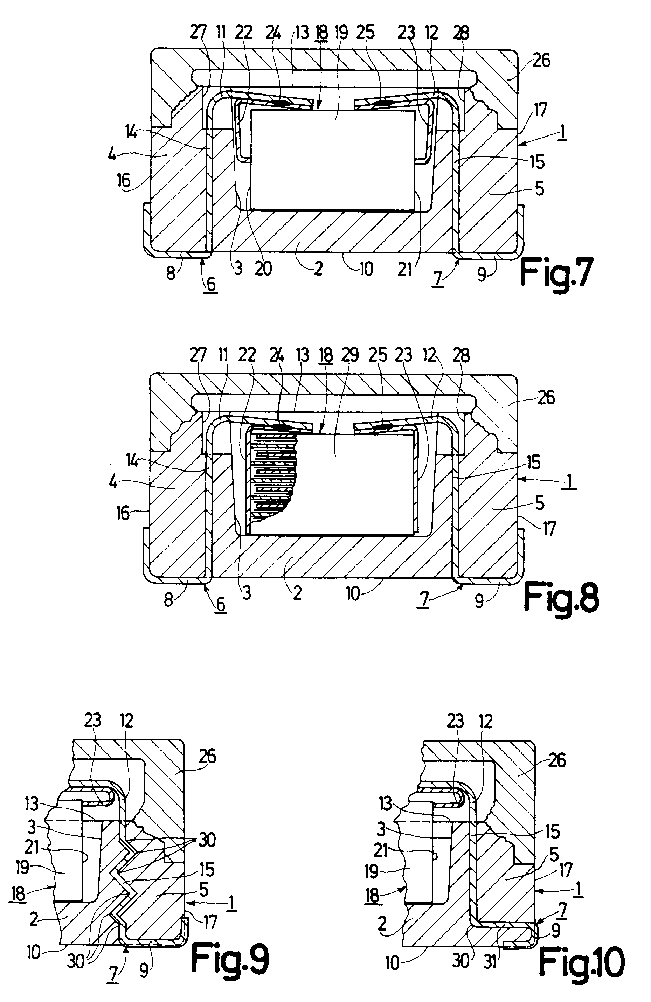

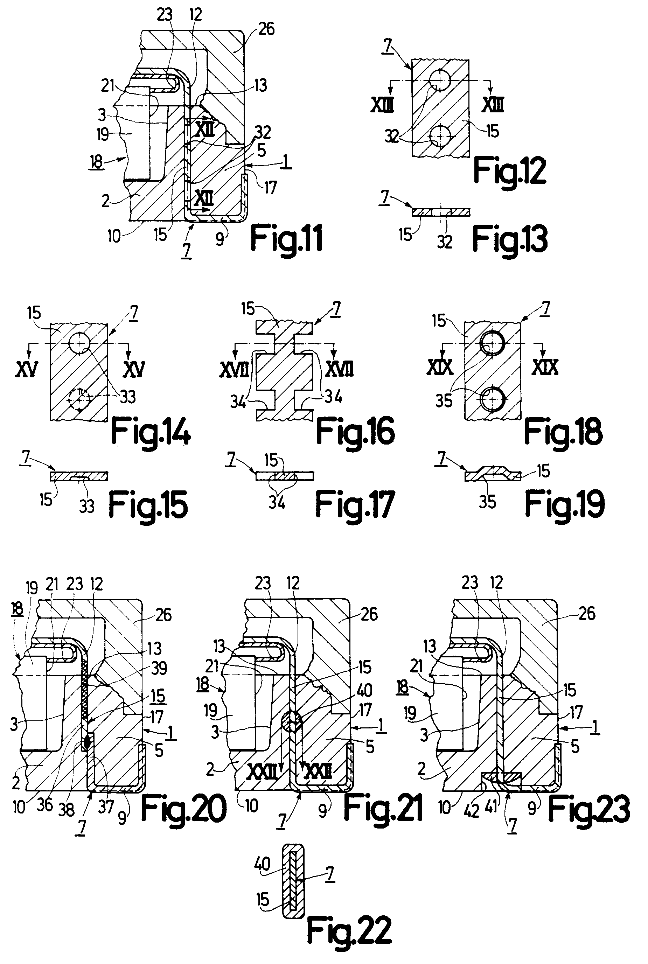

Die Erfindung wird im folgenden anhand der Zeichnungen, in welchen einige Ausführungsbeispiele der Erfindung dargestellt sind, auf die sie jedoch nicht beschränkt sein soll, näher erläutert. Fig.1 zeigt im Längsschnitt einen zur Aufnahme einer Kondensatorzelle bestimmten schalenförmigen Gehäuseteil aus Kunststoff, in den zwei Anschlußleitungen eingebettet sind. Fig.2 zeigt den schalenförmigen Gehäuseteil nach Fig.1, in den eine hier als Kondensatorwickel ausgebildete Kondensatorzelle eingesetzt ist. Fig.3 zeigt den schalenförmigen Gehäuseteil mit in ihn eingesetzten Kondensatorwickel nach Fig.2, wobei die in den schalenförmigen Gehäuseteil eingebetteten Anschlußleitungen mit ihren in den für den Kondensatorwickel bestimmten Aufnahmeraum austretenden Enden mit den Elektrodenanschlüssen des Kondensatorwickels verbunden sind. Fig.4 zeigt in Explosionsdarstellung den schalenförmigen Gehäuseteil mit in ihn eingesetzten Kondensatorwickel nach Fig.3 sowie einen zum Abschließen des schalenförmigen Gehäuseteiles bestimmten deckelförmigen Gehäuseteil, wobei die mit den Elektrodenanschlüssen verbundenen Enden der Anschlußleitungen zu der vom Boden des schalenförmigen Gehäuseteiles abgewandten Mantelfläche des Kondensatorwickels hin abgewinkelt sind. Fig.5 zeigt den schalenförmigen Gehäuseteil mit in ihn eingesetzten Kondesatorwickel nach Fig.4 und mit auf ihn aufgesetzten deckelförmigen Gehäuseteil. Fig.6 zeigt den schalenförmigen Gehäuseteil mit auf ihn aufgesetzten deckelförmigen Gehäuseteil nach Fig.5, wobei der deckelförmige Gehäuseteil mit dem schalenförmigen Gehäuseteil dichtend verbunden und damit der Elektrolytkondensator fertiggestellt ist. Fig.7 zeigt eine Abwandlung des Elektrolytkondensators nach Fig.6, wobei die in den Aufnahmeraum für den Kondensatorwickel austretenden Enden der Anschlußleitungen aus im Bereich der Oberseite an den Innenseiten der Seitenwände des schalenförmigen Gehäuseteiles vorgesehenen Ausnehmungen austreten und zusammen mit den mit ihnen verbundenen Elektrodenanschlüssen des Kondensatorwickels so weit zu der vom Boden des schalenförmigen Gehäuseteiles abgewandten Mantelfläche des Kondensatorwickels hin abgewinkelt sind, daß sie an demselben anliegen und ihn gegen den Boden des schalenförmigen Gehäuseteiles drücken. Fig.8 zeigt eine Abwandlung des Ausführungsbeispieles nach Fig.7, wobei die Kondensatorzelle als Kondensatorstapel ausgebildet ist. Fig.9 zeigt ausschnittsweise eine Abwandlung des Elektrolytkondensators nach Fig.6, wobei eine Anschlußleitung im Bereich ihres in den schalenförmigen Gehäuseteil eingebetteten Abschnittes mehrere Abbiegungen aufweist. Fig.10 zeigt in Abwandlung des Ausführungsbeispieles nach Fig.9 eine Ausführungsform, bei der eine Anschlußleitung im Bereich ihres in den schalenförmigen Gehäuseteil eingebetteten Abschnittes im Bereich des Bodens des schalenförmigen Gehäuseteiles eine als Abwinkelung ausgebildete Abbiegung aufweist, mit deren abgewinkeltem Abschnitt sie aus der Seitenwand des schalenförmigen Gehäuseteiles an deren Außenseite austritt. Fig.11 zeigt ausschnittsweise eine weitere Abwandlung des Elektrolytkondensators nach Fig.6, wobei eine streifenförmig ausgebildete Anschlußleitung im Bereich ihres in den schalenförmigen Gehäuseteil eingebetteten Abschnittes mit zwei sich quer zur Streifenebene erstreckenden kreisförmigen Ausnehmungen versehen ist. Fig.12 zeigt im Schnitt nach der Linie XII-XII in Fig.11 den zwei Ausnehmungen aufweisenden Abschnitt der Anschlußleitung. Fig.13 zeigt einen Schnitt nach der Linie XIII-XIII in Fig.12. Fig.14 zeigt in der Darstellungsweise von Fig.12 eine Abwandlung des Ausführungsbeispieles nach Fig.11, wobei eine streifenförmige Anschlußleitung mit zwei als Vertiefungen ausgebildeten Ausnehmungen versehen ist. Fig.15 zeigt einen Schnitt nach der Linie XV-XV in Fig.14. Fig.16 zeigt in der Darstellungsweise von Fig.12 eine andere Abwandlung des Ausführungsbeispieles nach Fig.11, wobei eine streifenförmige Anschlußleitung je zwei randseitige Ausnehmungen aufweist. Fig.17 zeigt einen Schnitt nach der Linie XVII-XVII in Fig.16. Fig.18 zeigt in der Darstellungsweise von Fig.12 eine weitere Abwandlung des Ausführungsbeispieles nach Fig.11, wobei eine streifenförmige Anschlußleitung mit zwei Einbuchtungen versehen ist. Fig.19 zeigt einen Schnitt nach der Linie XIX-XIX in Fig. 18. Fig.20 zeigt ausschnittsweise eine andere Abwandlung des Elektrolytkondensators nach Fig.6, wobei eine aus einem Ventilmetall bestehende, in den Aufnahmeraum für den Kondensatorwickel austretende Anschlußleitung im Bereich ihres in den schalenförmigen Gehäuseteil eingebetteten Abschnittes an ihrer Oberfläche mit einer sie umfangsseitig umfassenden Sperrschicht versehen ist. Fig.21 zeigt ausschnittsweise eine weitere Abwandlung des Elektrolytkondensators nach Fig.6, wobei eine Anschlußleitung mit einem sie umfangsseitig ringförmig umfassenden Dichtungselement umgeben ist, das vollständig in den schalenförmigen Gehäuseteil eingebettet ist. Fig.22 zeigt im Schnitt nach der Linie XXII-XXII in Fig.21 die vom Dichtungselement umgebene Anschlußleitung. Fig.23 zeigt eine Abwandlung des Ausführungsbeispieles nach Fig.21, wobei das eine Anschlußleitung umgebende Dichtungselement unmittelbar anschließend an den in den schalenförmigen Gehäuseteil eingebetteten Abschnitt der Anschlußleitung an deren äußerer Austrittsstelle aus dem schalenförmigen Gehäuseteil, an denselben angrenzend, angeordnet ist.

Anhand der Figuren 1 bis 6 wird ein erfindungsgemäßes Verfahren zur Herstellung eines Elektrolytkondensators beschrieben, dessen Kondensatorzelle in einem Gehäuse aus Kunststoff untergebracht ist, wobei von außerhalb des Gehäuses kommende, in dasselbe abschnittsweise eingebettete Anschlußleitungen zu den seitlichen Elektrodenanschlüssen der Kondensatorzelle führen und mit diesen verbunden sind. In Fig.1 ist mit 1 ein schalenförmiger Gehäuseteil bezeichnet, der einen Boden 2 und vier Seitenwände aufweist, von welchen eine wannenförmige Vertiefung 3 begrenzt wird, die zur Aufnahme einer Kondensatorzelle bestimmt ist. In zwei einander gegenüberliegende Seitenwände 4 und 5 sind Anschlußleitungen 6 und 7 eingebettet, was in üblicher Weise unmittelbar bei der Herstellung des aus Kunststoff bestehenden schalenförmigen Gehäuseteiles 1 geschieht. Diese beiden Anschlußleitungen 6 und 7, die drahtförmig oder streifenförmig ausgebildet sein können, sind dabei so angeordnet, daß ihr eines Ende 8 beziehungsweise 9 an der Außenseite 10 des Bodens 2 und ihr anderes Ende 11 beziehungsweise 12 an der Oberseite 13 des schalenförmigen Gehäuseteiles 1 im Bereich von dessen Seitenwänden 4 und 5 austritt, wobei dann ihre in die Seitenwände 4 und 5 eingebetteten Abschnitte 14 und 15 vom Boden 2 weg im wesentlichen parallel zu den Seitenwänden 4 und 5 verlaufen. Die die äußeren Anschlüsse des Elektrolytkondensators bildenden Enden 8 beziehungsweise 9 der Anschlußleitungen 6 und 7 sind entlang der Außenseite 10 des Bodens 2 zu den Seitenwänden 4 beziehungsweise 5 hin abgewinkelt, wobei sie noch entlang eines Teiles der betreffenden Außenseite 16 beziehungsweise 17 der Seitenwand 4 beziehungsweise 5 verlaufen, so daß sie an diesen Stellen einfach kontaktiert werden können. Die anderen an der Oberseite 13 des schalenförmigen Gehäuseteiles 1 im Bereich von dessen Seitenwänden 4 und 5 austretenden Enden 11 beziehungsweise 12 der Anschlußleitungen 6 beziehungsweise 7 bilden eine im wesentlichen geradlinige Fortsetzung der eingebetteten Abschnitte 14 beziehungsweise 15, wobei ihre Austrittsstellen so gewählt sind, daß sie im weiteren im Inneren des durch das gesamte Gehäuse gebildeten Aufnahmeraumes für die Kondensatorzelle liegen. Die Länge der Enden 11 und 12 der Anschlußleitungen 6 und 7 sind dabei so bemessen, daß sie bis in den Bereich der wannenförmigen Vertiefung 3 hin abgewinkelt werden können, ohne sich dann aber dabei gegenseitig zu kontaktieren, was bedeutet, daß sie dabei nicht bis in den Bereich der Mitte der Vertiefung 3 reichen.

In die Vertiefung 3 eines derartigen schalenförmigen Gehäuseteiles 1 wird nun, wie dies Fig.2 zeigt, eine hier symbolisch dargestellte Kondensatorzelle 18 eingesetzt, die im vorliegenden Fall aus einem Kondensatorwickel 19 besteht, aus dessen beiden seitlichen Stirnflächen 20 beziehungsweise 21 je ein Elektrodenanschluß 22 beziehungsweise 23 austritt, der in üblicher Weise mit einem von zwei voneinander isolierten, aufgewickelten Elektrodenstreifen verbunden ist. Das Einsetzen des Kondensatorwickels 19 in die Vertiefung 3 erfolgt dabei so, daß seine Elektrodenanschlüsse 22 und 23 benachbart zu den Seitenwänden 4 und 5 zu liegen kommen, in welche die Anschlußleitungen 6 und 7 eingebettet sind. Die Höhe der Seitenwände des schalenförmigen Gehäuseteiles 1 ist dabei so gewählt, daß der Kondensatorwickel 19 im wesentlichen zur Gänze von ihnen umschlossen wird, also der Kondensatorwickel 19 praktisch vollständig innerhalb der Vertiefung 3 des schalenförmigen Gehäuseteiles 1 liegt. Im vorliegenden Fall ist angenommen, daß die Elektrodenanschlüsse 22 und 23 des Kondensatorwickels 19 im Bereich der vom Boden 2 des schalenförmigen Gehäuseteiles 1 abgewandten Mantelfläche des Kondensatorwickels 19 aus seinen Stirnflächen 20 und 21 seitlich austreten, wobei sie dann so abgewinkelt werden, daß sie im wesentlichen parallel zu den Enden 11 und 12 der Anschlußleitungen 6 und 7 und neben diesen verlaufen, wie dies Fig.2 zeigt.

Im folgenden werden die Enden 11 und 12 der Anschlußleitungen 6 und 7 mit den Elektrodenanschlüssen 22 und 23 des Kondensatorwickels außerhalb des schalenförmigen Gehäuseteiles 1 miteinander verbunden, wie dies Fig.3 zeigt. Eine solche Verbindung kann beispielsweise durch einen Schweißvorgang mit Ultraschall, mit Laserstrahl oder auf elektrischem Wege erreicht werden, wobei diese mit den Bezugszeichen 24 beziehungsweise 25 bezeichneten Verbindungen einfach und sicher hergestellt werden können, da sie vollständig außerhalb des schalenförmigen Gehäuseteiles 1 liegend an vollkommen frei zugänglichen Stellen der Enden 11 und 12 der Anschlußleitungen 6 und 7 und der Elektrodenanschlüsse 22 und 23 vorgenommen werden.

Hierauf werden die mit den benachbarten Elektrodenanschlüssen 22 und 23 des Kondendsatorwickels 19 verbundenen Enden 11 und 12 der Anschlußleitungen 6 und 7, zu der vom Boden 2 des schalenförmigen Gehäuseteiles 1 abgewandten Mantelfläche des Kondensatorwickels 19 hin L-förmig abgewinkelt, wobei es aber zu keiner Kontaktierung kommt, da ihre Längen, wie erwähnt, dementsprechend gewählt wurden. Diese Phase des Herstellungsverfahrens ist in Fig.4 dargestellt, in der auch ein zum schalenförmigen Gehäuseteil 1 passender, das Gehäuse des Elektrolytkondensators vervollständigender deckelförmiger Gehäuseteil 26 dargestellt ist, mit dem der den Kondensatorwickel 19 im wesentlichen zur Gänze aufnehmende schalenförmige Gehäuseteil 1 abgeschlossen werden kann, wobei dann, wie ersichtlich, die Enden 11 und 12 der Anschlußleitungen 6 und 7 vollständig innerhalb des durch die beiden Gehäuseteile gebildeten Aufnahmeraumes für den Kondensatorwickel 19 zu liegen kommen.

Fig.5 zeigt im weiteren die Phase des Herstellungsverfahrens, in welcher der deckelförmige Gehäuseteil 26 auf den schalenförmigen Gehäuseteil 1 aufgesetzt ist. Hierauf werden der schalenförmige Gehäuseteil 1 und der deckelförmige Gehäuseteil 26 miteinander dichtend verbunden, was im vorliegenden Fall durch einen Ultraschallschweißvorgang erfolgt, wobei der deckelförmige Gehäuseteil 26 und die Seitenwände des schalenförmigen Gehäuseteiles 1 in ihren miteinander zusammenwirkenden Randbereichen teilweise gestaucht und fließend miteinander verbunden werden. Auf diese Weise wird eine besonders gute und dichte Verbindung der beiden Gehäuseteile erhalten. Selbstverständlich stehen im Rahmen des hiefür bekannten Standes der Technik auch noch andere Möglichkeiten für eine dichte Verbindung der beiden Gehäuseteile zur Verfügung. Fig.6 zeigt den auf diese Weise fertiggestellten Elektrolytkondensator.

Bei einem derartigen Herstellungsverfahren kann das Imprägnieren der Kondensatorzelle 18 mit einem Elektrolyten in verschiedenen Phasen des Herstellungsverfahrens erfolgen. Beispielsweise kann der bereits mit einem Elektrolyten imprägnierte Kondensatorwickel 19, in der in Fig.2 gezeigten Herstellungsphase, in den schalenförmigen Gehäuseteil 1 eingesetzt werden. Der Elektrolyt kann aber auch erst nach dem Einsetzen des Kondensatorwickels 19 in den schalenförmigen Gehäuseteil 1 in die Vertiefung 3 eingefüllt und so der Kondensatorwickel 18 imprägniert werden. In beiden Fällen wird dann nachher die Verbindung der Enden 11 und 12 der Anschlußleitungen 6 und 7 mit den Elektrodenanschlüssen 22 und 23 des Kondensatorwickels 19 vorgenommen. Wie ersichtlich, besteht dabei keine Gefahr, daß Elektrolytflüssigkeit in den Bereich gelangt, wo die Verbindung der Enden 11 und 12 der Anschlußleitungen 6 und 7 mit den Elektrodenanschlüssen 22 und 23 vorgenommen wird, da die betreffenden Verbindungsstellen vollkommen außerhalb des schalenförmigen Gehäuseteiles 1 liegen. Damit werden einwandfreie und sichere Verbindungen 24 und 25 der Enden 11 und 12 der Anschlußleitungen 6 und 7 mit den Elektrodenanschlüssen 22 und 23 des Kondensatorwickels 19 erhalten, die auch einfach herzustellen sind. Zweckmäßigerweise kann aber auch der Elektrolyt erst nach erfolgter Verbindung der Enden 11 und 12 mit den Elektrodenanschlüssen 22 und 23, anschließend an die in Fig.3 gezeigte Phase des Herstellungsverfahrens, in die Vertiefung 3 des schalenförmigen Gehäuseteiles 1 eingefüllt werden, wobei dann überhaupt keine Gefahr besteht, daß die Herstellung der Verbindungen 24 und 25 durch die Anwesenheit von Elektrolytflüssigkeit beeinträchtigt werden könnte. Da der Kondensatorwickel 19, wie erwähnt, praktisch zur Gänze vom schalenförmigen Gehäuseteil 1 aufgenommen wird, gestaltet sich auch das Einfüllen des Elektrolyten in die Vertiefung 3 des schalenförmigen Gehäuseteiles 1 und damit das Imprägnieren des Kondensatorwickels 19 mit dem Elektrolyten einfach und sicher.

Dadurch, daß sich bei einem derartigen Elektrolytkondensator die Anschlußleitungen 6 und 7 vom Boden 2 des schalenförmigen Gehäuseteiles 1 weg, im wesentlichen parallel zur Kondensatorzelle 18 verlaufend, innerhalb der Seitenwände 4 und 5 des die Kondensatorzelle 18 im wesentlichen zur Gänze aufnehmenden und damit relativ hohen schalenförmigen Gehäuseteiles 1 bis zu dessen Oberseite 13 hin erstrecken, sind die in die Seitenwände 4 und 5 eingebetteten Abschnitte 14 und 15 der Anschlußleitungen 6 und 7 relativ lang, wodurch sich entlang derselben auch ein relativ langer Kriechweg ergibt, den der sich im Aufnahmeraum für die Kondensatorzelle 18 befindende Elektrolyt überwinden müßte, um aus dem Gehäuse des Elektrolytkondensators austreten zu können. Auf diese Weise wird somit eine gute Abdichtung erhalten, was für eine lange Lebensdauer und einwandfreie Funktionsweise des Elektrolytkondensators sehr wichtig ist. Außerdem sind dabei die Anschlußleitungen 6 und 7 sicher in den schalenförmigen Gehäuseteil 1 eingebettet.

Bei dem in Fig.7 gezeigten Ausführungsbeispiel sind die Seitenwände 4 und 5 des schalenförmigen Gehäuseteiles 1 so hoch ausgeführt, daß die Oberseite 13 des schalenförmigen Gehäuseteiles 1 den in die Vertiefung 3 eingesetzten Kondensatorwickel 19 etwas überragt, so daß der Kondensatorwickel 19 zur Gänze in der Vertiefung 3 aufgenommen ist. Auf diese Weise kann das Imprägnieren des Kondensatorwickels 19 mit einem Elektrolyten besonders sicher vorgenommen werden. Auch hier verlaufen wieder die in die Seitenwände 4 und 5 eingebetteten Abschnitte 14 und 15 der Anschlußleitungen 6 und 7 vom Boden 2 des schalenförmigen Gehäuseteiles 1 weg, im wesentlichen parallel zum Kondensatorwickel 19 beziehungsweise zu den Seitenwänden 4 und 5 des schalenförmigen Gehäuseteiles 1.

Beim vorliegenden Ausführungsbeispiel treten die Enden 11 und 12 der Anschlußleitungen 6 und 7 jedoch nicht unmittelbar an der Oberseite 13 des schalenförmigen Gehäuseteiles 1 aus dessen Seitenwänden 4 und 5 aus, sondern aus im Bereich der Oberseite 13 an den Innenseiten der Seitenwände 4 und 5 vorgesehenen Ausnehmungen 27 und 28. Hiedurch ist eine geringere erforderliche Bauhöhe für den deckelförmigen Gehäuseteil 26 möglich, da die mit den Elektrodenanschlüssen 22 und 23 des Kondensatorwickels 19 verbundenen Enden 11 und 12 der Anschlußleitungen 6 und 7 unmittelbar von den Ausnehmungen 27 und 28 ausgehend zu der vom Boden 2 des schalenförmigen Gehäuseteiles 1 abgewandten Mantelfläche des Kondensatorwickels 19 hin L-förmig abgewinkelt werden können. Da im vorliegenden Fall die Seitenwände 4 und 5 den in die Vertiefung 3 eingesetzten Kondensatorwickel 19 etwas überragen, steht dabei trotz der vorgesehenen Ausnehmungen 27 und 28 genügend Bauhöhe der Seitenwände 4 und 5 zur Verfügung, um die Anschlußleitungen 6 und 7 über entsprechend lange Abschnitte 14 und 15 in die Seitenwände 4 und 5 sicher einbetten zu können, wodurch wieder ein relativ langer Kriechweg für den sich im Aufnahmeraum für den Kondensatorwickel 19 befindenden Elektrolyten erhalten und damit die Gefahr eines Austretens des Elektrolyten aus dem Gehäuse des Elektrolytkondensators herabgesetzt wird.

Weiters sind beim vorliegenden Ausführungsbeispiel die mit den Elektrodenanschlüssen 22 und 23 des Kondensatorwickels 19 verbundenen Enden 11 und 12 der Anschlußleitungen 6 und 7 so weit zur Mantelfläche des Kondensatorwickels 19 hin L-förmig abgewinkelt, daß sie gemeinsam am Kondensatorwickel 19 anliegen und diesen gegen den Boden 2 des schalenförmigen Gehäuseteiles 1 drücken. Hiedurch wird der Kondensatorwickel 19 sicher in der Vertiefung 3 des schalenförmigen Gehäuseteiles 1 festgehalten und auch vor Vibrationen geschützt, denen der Elektrolytkondensator ausgesetzt sein kann, wodurch ebenfalls eine einwandfreie Funktionsweise und längere Lebensdauer des Elektrolytkondensators erhalten wird. Wie aus Fig.7 ersichtlich ist, ist beim vorliegenden Ausführungsbeispiel angenommen, daß die Elektrodenanschlüsse 22 und 23 mittig aus den Stirnflächen 20 und 21 des Kondensatorwickels 19 austreten, was ihre einwandfreie Verbindung mit den Enden 11 und 12 der Anschlußleitungen 6 und 7 in keiner Weise behindert, da diese Verbindungen 24 und 25 wieder vollständig außerhalb des schalenförmigen Gehäuseteiles 1 vorgenommen werden, analog zu der in Fig.3 gezeigten Herstellungsphase des vorhergehend beschriebenen Ausführungsbeipieles.

In Fig.8 ist ein Elektrolytkondensator gezeigt, dessen Gehäuse gleich aufgebaut ist, wie das beim Elektrolytkondensator nach dem Ausführungsbeispiel gemäß Fig.7. Beim vorliegenden Ausführungsbeispiel gelangt jedoch eine Kondensatorzelle 18 zur Anwendung, die durch einen Kondensatorstapel 29 gebildet ist, der wieder seitliche Elektrodenanschlüsse 22 und 23 aufweist, die hier in üblicher Weise die einzelnen voneinander isoliert gestapelten Elektrodenlagen abwechselnd nacheinander miteinander verbinden. Auch bei diesem Ausführungsbeispiel sind die mit den Elektrodenanschlüssen 22 und 23 des Kondensatorstapels 29 verbundenen Enden 11 und 12 der Anschlußleitungen 6 und 7 so weit zu der vom Boden 2 des schalenförmigen Gehäuseteiles 1 abgewandten Deckfläche des Kondensatorstapels 29 hin L-förmig abgewinkelt, daß sie gemeinsam am Kondensatorstapel 29 anliegen und diesen gegen den Boden 2 des schalenförmigen Gehäuseteiles drücken.

Wie bereits erwähnt, ist eine sichere Einbettung der Anschlußleitungen 6 und 7 in die Seitenwände 4 und 5 des schalenförmigen Gehäuseteiles 1 besonders wichtig, um eine gute Abdichtung des Gehäuses des Elektrolytkondensators zu erhalten, damit kein Elektrolyt entlang dieser Einbettungen aus dem Gehäuse austreten kann. Hiezu besteht eine Reihe von möglichen zusätzlichen Maßnahmen, wie im folgenden erläutert wird. In diesem Zusammenhang ist bei dem in Fig.9 gezeigten Ausführungsbeispiel vorgesehen, daß der in die Seitenwand 5 eingebettete Abschnitt 15 der Anschlußleitung 7 nicht wie bei den vorhergehend beschriebenen Ausführungsbeispielen geradlinig innerhalb der Seitenwand 5 verläuft, sondern im vorliegenden Fall mehrere Abbiegungen 30 aufweist. Diese Abbiegungen 30 sind hier so gestaltet, daß sie einen zickzackförmigen Verlauf für einen Teil des eingebetteten Abschnittes 15 der Anschlußleitung 7 ergeben. Es wäre aber auch ohne weiteres möglich, die Abbiegungen 30 so zu gestalten, daß sich beispielsweise ein wellenförmiger oder mäanderförmiger Verlauf ergibt. Auf diese Weise werden zwei Ziele erreicht, nämlich daß einerseits die Länge des in die Seitenwand 5 eingebetteten Abschnittes 15 der Anschlußleitung 7 vergrößert und damit auch der Kriechweg entlang der Einbettung verlängert wird und andererseits durch das sich an die Abbiegung 30 anpassende Material der Seitenwand 5 eine sicherere und festerere Einbettung der Anschlußleitung 7 erhalten wird. Beide Umstände ergeben eine bessere Abdichtung des Gehäuses des Elektrolytkondensators im Bereich der Einbettung der betreffenden Anschlußleitung.

Beim Ausführungsbeispiel nach Fig.10 weist der in die Seitenwand 5 eingebettete Abschnitt 15 der Anschlußleitung 7 im Bereich des Bodens 2 des schalenförmigen Gehäuseteiles 1 eine einzige im wesentlichen als Abwinkelung ausgebildete Abbiegung 30 auf, mit deren abgewinkeltem Abschnitt 31 die Anschlußleitung 7 aus der Seitenwand 5 an deren Außenseite 17 austritt, wobei dann das den äußeren Anschluß des Elektrolytkondensators bildende Ende 9 der Anschlußleitung 7 entlang dieser Außenseite 17 zur Außenseite 10 des Bodens 2 des schalenförmigen Gehäuseteiles 1 hin abgewinkelt ist, dies in analoger Weise zu dem in den Figuren 1 bis 6 beschriebenen Ausführungsbeispiel. Durch das Vorsehen einer derartigen als Abwinkelung ausgebildeten Abbiegung 30 wird ebenfalls eine sehr sichere Einbettung der Anschlußleitung 7 in den schalenförmigen Gehäuseteil 1 erhalten, wobei auch die Länge der Einbettung und damit der Kriechweg zur Verminderung der Gefahr eines Austretens des Elektrolyten aus dem Gehäuse des Elektrolytkondensators verlängert wird.

Bei dem in den Figuren 11, 12 und 13 gezeigten Ausführungsbeispiel ist zum Erreichen einer sichereren Einbettung des Abschnittes 15 der Anschlußleitungen 7 in die Seitenwand 5 des schalenförmigen Gehäuseteiles 1 vorgesehen, daß sie bei einer streifenförmigen Ausbildung der Anschlußleitung 7 im Bereich ihres eingebetteten Abschnittes 15 zwei sich quer zur Streifenebene erstreckende, im vorliegenden Fall die Anschlußleitung 7 durchsetzende Ausnehmungen 32 aufweist, welche in ihren Bereichen die Querschnittsfläche der Anschlußleitung herabsetzen. Bei der Herstellung des schalenförmigen Gehäuseteiles 1 dringt dabei dessen Material in diese Ausnehmungen 32 ein und verankert damit die Anschlußleitung 7 innerhalb der Seitenwand 5, wobei einer Bildung von entlang der Einbettung der Anschlußleitung 7 verlaufenden Spalten zufolge unterschiedlicher Schrumpfungs- und Ausdehnungsverhalten des Gehäuses und der Anschlußleitung vorgebeugt wird. Selbstverständlich kann die Anzahl der vorgesehenen Ausnehmungen beliebig gewählt werden. So kann beispielsweise auch nur eine derartige Ausnehmung vorgesehen sein oder können auch mehr als zwei derartige Ausnehmungen vorgesehen werden. Ebenso gibt es für die Formgebung der Ausnehmungen eine Reihe von Möglichkeiten. Beim vorliegenden Ausführungsbeispiel sind die Ausnehmungen 32 als kreisförmige öffnungen innerhalb der streifenförmigen Anschlußleitung 7 ausgebildet. Ebenso könnten diese Ausnehmungen aber auch beispielsweise eine dreieckige oder rechteckige Form aufweisen. Auch ist es nicht zwingend notwendig, daß die Ausnehmungen die streifenförmige Anschlußleitung vollständig durchsetzen, also als durchgehende öffnungen ausgebildet sind, sondern die Ausnehmungen könnten beispielsweise auch, wie dies das Ausführungsbeispiel nach den Figuren 14 und 15 zeigt, nur als Vertiefungen 33 ausgebildet sein, wobei sie auch in ihren Bereichen die Querschnittsfläche der Anschlußleitung 7 herabsetzen. Beim Vorsehen mehrerer solcher Vertiefungen 33 können diese dann abwechselnd an den beiden Hauptflächen der streifenförmigen Anschlußleitung 7 vorgesehen sein, wie dies beim vorliegenden Ausführungsbeispiel gezeigt ist. Derartige Ausnehmungen müssen auch nicht unbedingt innerhalb der streifenförmig ausgebildeten Anschlußleitung 7 vorgesehen sein, sondern sie könnten auch, wie dies das Ausführungsbeispiel nach den Figuren 16 und 17 zeigt, im Randbereich der streifenförmigen Anschlußleitung 7 vorgesehen sein, wobei die hier mit den Bezugszeichen 34 bezeichneten Ausnehmungen eine beispielsweise beidseitige mäanderförmige Begrenzung der Anschlußleitung 7 bilden. Selbstverständlich könnten auch die Ausnehmungen nach den vorstehend angeführten Ausführungsbeispielen miteinander kombiniert angewandt werden.

Bei dem in den Figuren 18 und 19 gezeigten Ausführungsbeispiel ist zum Erreichen einer sichereren Einbettung des Abschnittes 15 der streifenförmig ausgebildeten Anschlußleitung 7 in die Seitenwand 5 des schalenförmigen Gehäuseteiles 1 vorgesehen, daß die Anschlußleitung 7 im Bereich ihres eingebetteten Abschnittes 15 zwei sich quer zur Streifenebene erstreckende Einbuchtungen 35 aufweist, die beispielsweise durch einen Prägevorgang hergestellt werden, ohne dabei im Bereich dieser Einbuchtungen 35 die Querschnittsfläche der Anschlußleitung herabzusetzen. Auch in diesem Fall dringt dabei bei der Herstellung des schalenförmigen Gehäuseteiles dessen Material in die Einbuchtungen 35 ein und verankert damit die Anschlußleitung innerhalb der betreffenden Seitenwand. Selbstverständlich bestehen auch hinsichtlich dieses Ausführungsbeispieles verschiedene Möglichkeiten für die Formgebung und Anordnung derartiger Einbuchtungen, analog zu den anhand der Figuren 11 bis 17 beschriebenen Möglichkeiten für die Formgebung und Anordnung der dort bei diesen Ausführungsbeispielen vorgesehenen Ausnehmungen 32, 33 und 34.

Bekanntlich ist für eine einwandfreie Funktionsweise eines Elektrolytkondensators erforderlich, daß die in den Aufnahmeraum für die Kondensatorzelle austretenden Enden der Anschlußleitungen aus einem Ventilmetall, beispielsweise aus Reinstaluminium, bestehen, damit durch das Zusammenwirken mit dem Elektrolyten nicht die elektrischen Eigenschaften des Elektrolytkondensators beeinträchtigt werden. So können beispielsweise die gesamten Anschlußleitungen aus einem Ventilmetall bestehen, deren außerhalb des Gehäuses verlaufende, die äußeren Anschlüsse des Elektrolytkondensators bildende Enden dann lötfähig gemacht werden, was beispielsweise durch Verzinnen geschehen kann. Wie beim Ausführungsbeispiel nach Fig.20 gezeigt ist, können die Anschlußleitungen, im vorliegenden Fall die Anschlußleitung 7, aber auch aus zwei miteinander verbundenen Teilen 36 und 37 bestehen, wobei dann der mit dem Ende 12 in den Aufnahmeraum für den Kondensatorwickel 19 austretende Teil 36 der Anschlußleitung 7 aus einem Ventilmetall und der andere mit dem Ende 9 zur Außenseite 10 des schalenförmigen Gehäuseteiles 1 führende, den einen äußeren Anschluß für den Elektrolytkondensator bildende Teil 37 aus einem lötfähigen anderen leitfähigen Material, wie beispielsweise verzinnter Bronze, besteht. Beim vorliegenden Ausführungsbeispiel liegt die Verbindungsstelle 38 der beiden Teile 36 und 37 im Bereich des Abschnittes 15 der Anschlußleitung 7 der in die Seitenwand 5 des schalenförmigen Gehäuseteiles 1 eingebettet ist. An sich könnte eine solche Verbindungsstelle der zweiteilig ausgebildeten Anschlußleitung aber beispielsweise auch an der Außenseite des Gehäuses liegen.

Der aus einem Ventilmetall bestehende Teil 36 der Anschlußleitung 7 ist nun im wesentlichen im Bereich des in den schalenförmigen Gehäuseteil 1 eingebetteten Abschnittes 15 bis zu einem Teil des in den Aufnahmeraum für den Kondensatorwickel 19 austretenden Endes 12 mit einer ihn umfangsseitig umfassenden Sperrschicht 39 versehen. Üblicherweise besteht eine solche Sperrschicht aus einer Oxidschicht, die mittels eines Formierelektrolyten gebildet wird, wobei deren Dicke die Sperrspannung der Sperrschicht bestimmt. Durch eine solche Sperrschicht wird eine Oberflächenausbildung der Anschlußleitung erhalten, die im Zusammenwirken mit dem Kunststoffmaterial des schalenförmigen Gehäuseteiles, in das die Anschlußleitung eingebettet ist, eine verbesserte Hafteigenschaft ergibt, wodurch eine sicherere Einbettung der Anschlußleitung in den schalenförmigen Gehäuseteil erhalten wird. Als zweckmäßig hat sich dabei erwiesen, wenn die Dicke der Sperrschicht 39 so gewählt wird, daß die Sperrspannung der Sperrschicht 39 höher ist als die Spannung, mit der der Kondensatorwickel 19 entsprechend seiner Betriebsspannung formiert wird. Auf diese Weise werden im Bereich einer anodenseitigen Anschlußleitung des Kondensatorwickels die elektrokapillaren Kräfte, welche einen Elektrolytaustritt im Bereich dieser anodenseitigen Anschlußleitung des Kondensatorwickels begünstigen, praktisch vollkommen aufgehoben, wodurch sich eine weitere Verbesserung der Abdichtung des Gehäuses ergibt.

Eine andere Möglichkeit einer Verbesserung der Abdichtung des Gehäuses des Elektrolytkondensators im Bereich der Einbettung der Anschlußleitungen in dasselbe ist beim Ausführungsbeispiel nach den Figuren 21 und 22 gezeigt. Hier ist die Anschlußleitung 7 im Bereich ihres in den schalenförmigen Gehäuseteil 1 eingebetteten Abschnittes 15 von einem an der Anschlußleitung fest haftenden, sie umfangsseitig ringförmig umfassenden, aus einem Kunstharz bestehenden Dichtungselement 40 umgeben, wobei im vorliegenden Fall dieses Dichtungselement 40 vollständig in den schalenförmigen Gehäuseteil 1 eingebettet ist. Vorzugsweise besteht dieses Dichtungselement 40 aus einem wärmebeständigen, elastisch nachgiebigen Kunstharz, wie beispielsweise einem Silikonkautschuk. Auf diese Weise wird weitgehendst unabhängig von der Materialwahl für den schalenförmigen Gehäuseteil 1 eine besonders sichere Abdichtung rund um die in den schalenförmigen Gehäuseteil 1 eingebettete Anschlußleitung 7 erhalten, da mittels eines solchen Dichtungselementes die unterschiedlichen Schrumpfungs- und Ausdehnungsverhalten des schalenförmigen Gehäuseteiles 1 und der Anschlußleitung 7 besonders sicher ausgeglichen werden können. Selbstverständlich könnten im Bereich des Abschnittes 15 der Anschlußleitung 7 auch mehrere derartige Dichtungselemente 40 nacheinander angeordnet werden.

Bei dem in Fig.23 gezeigten Ausführungsbeispiel ist ein wie im vorstehenden angegebenes Dichtungselement, das hier mit dem Bezugszeichen 41 bezeichnet ist, unmittelbar anschließend an den in den schalenförmigen Gehäuseteil 1 eingebetteten Abschnitt 15 der Anschlußleitung 7, an mindestens einer ihrer beiden Austrittsstellen aus dem schalenförmigen Gehäuseteil 1, an denselben angrenzend angeordnet. Im vorliegenden Fall ist dieses Dichtungselement 41 in einer an der Außenseite 10 des Bodens 2 des schalenförmigen Gehäuseteiles 1 vorgesehenen Vertiefung 42 angeordnet, wodurch es das an den in den schalenförmigen Gehäuseteil 1 eingebetteten Abschnitt 15 der Anschlußleitung 7 anschließende, aus dem schalenförmigen Gehäuseteil 1 an dessen Außenseite 10 austretende, einen äußeren Anschluß des Elektrolytkondensators bildende Ende 9 unmittelbar angrenzend an die Außenseite 10 des schalenförmigen Gehäuseteiles 1 ringförmig umfaßt. Auf diese Weise wird die Austrittsstelle der Anschlußleitung aus dem schalenförmigen Gehäuseteil gut und sicher abgedichtet. Selbstverständlich wäre es auch möglich, ein solches Dichtungselement an der im Inneren des Aufnahmeraumes für den Kondensatorwickel liegenden Austrittsstelle des Abschnittes 15 im Bereich des an ihn anschließenden Endes 12 der Anschlußleitung 7 vorzusehen. Ebenso wäre es natürlich auch möglich, zusätzlich zu einem wie in den Figuren 21 und 22 gezeigten Dichtungselement 40 zusätzlich ein weiteres wie in der Fig. 23 gezeigtes Dichtungselement 41 vorzusehen.

Wie aus dem vorstehenden ersichtlich ist, besteht eine Reihe von Abwandlungsmöglichkeiten der beschriebenen Ausführungsbeispiele, ohne daß dabei der Rahmen der Erfindung verlassen wird. Dies gilt insbesondere hinsichtlich der Maßnahmen, mit welchen eine zusätzliche Verbesserung der Abdichtung des Gehäuses des Elektrolytkondensators im Bereich der in dasselbe eingebetteten Anschlußleitungen erreicht wird, wobei die beschriebenen einzelnen Maßnahmen auch miteinander kombiniert angewandt werden können.

## Patentansprüche

1. Elektrolytkondensator mit einem einen Aufnahmeraum für eine Kondensatorzelle (18) bildenden Gehäuse aus Kunststoff, das aus einem schalenförmigen, die seitliche Elektrodenanschlüsse (22,23) aufweisende Kondensatorzelle (18) im wesentlichen aufnehmenden Gehäuseteil (1) und einem diesen schalenförmigen Gehäuseteil (1) dichtend abschließenden deckelförmigen Gehäuseteil (26) besteht, wobei in die den Elektrodenanschlüssen (22,23) der Kondensatorzelle (18) benachbarten Seitenwände (4,5) des schalenförmigen Gehäuseteiles (1) Anschlußleitungen (6,7) eingebettet sind, die von außerhalb des schalenförmigen Gehäuseteiles (1) kommend, mit einem Ende (11,12) mit dem benachbarten Elektrodenanschluß (22,23) der Kondensatorzelle (18) verbunden sind, und die mindestens abschnittsweise, in Richtung vom Boden (2) des schalenförmigen Gehäuseteiles (1) weg, im wesentlichen parallel zur Kondensatorzelle (18) verlaufen wobei die in den Aufnahmeraum für die Kondensatorzelle (18) austretenden, mit den benachbarten Elektrodenanschlüssen (22,23) der Kondensatorzelle (18) verbundenen Enden (11,12) der Anschlußleitungen (6,7) zu der vom Boden (2) des schalenförmigen Gehäuseteiles (1) abgewandten Fläche der Kondensatorzelle (18) hin L-förmig abgewinkelt sind, ohne sich dabei gegenseitig zu kontaktieren, dadurch gekennzeichnet, daß die zur Kondensatorzelle (18) hin L-förmig abgewinkelten Enden (11,12) der Anschlußleitungen (6,7) zusammen mit den mit ihnen verbundenen Elektrodenanschlüssen (22,23) an der Kondensatorzelle (18) anliegen und diese gegen den Boden (2) des schalenförmigen Gehäuseteiles (1) drucken.

2. Elektrolytkondensator nach Anspruch 1, dadurch gekennzeichnet, daß die Anschlußleitungen (6,7) im Bereich ihrer in den schalenförmigen Gehäuseteil (1) eingebetteten Abschnitte (14,15) in ihrem Verlauf mindestens eine Abbiegung (30) aufweisen.

3. Elektrolytkondensator nach Anspruch 2, dadurch gekennzeichnet, daß die Anschlußleitungen (6,7) im Bereich des Bodens 2 des schalenförmigen Gehäuseteiles (1) eine im wesentlichen als Abwinkelung ausgebildete Abbiegung (30) aufweisen, mit deren abgewinkeltem Abschnitt sie aus der Seitenwand (4,5) des schalenförmigen Gehäuseteiles an deren Außenseite (16,17) austreten.

4. Elektrolytkondensator nach einem der vorhergehenden Ansprüche, der streifenförmig ausgebildete Anschlußleitungen aufweist, dadurch gekennzeichnet, daß die Anschlußleitungen (6,7) im Bereich ihrer in den schalenförmigen Gehäuseteil 1 eingebetteten Abschnitte (14,15) mit mindestens einer sich quer zur Streifenebene erstreckenden Ausnehmung (32;33;34) versehen sind, welche in ihrem Bereich die Querschnittsfläche der Anschlußleitungen herabsetzt.

5. Elektrolytkondensator nach einem der vorhergehenden Ansprüche, der streifenförmig ausgebildete Anschlußleitungen aufweist, dadurch gekennzeichnet, daß die Anschlußleitungen (6,7) im Bereich ihrer in den schalenförmigen Gehäuseteil (1) eingebetteten Abschnitte (14,15) mit mindestens einer sich quer zur Streifenebene erstreckenden Einbuchtung (35) versehen sind.

6. Elektrolytkondensator nach einem der vorhergehenden Ansprüche, bei dem mindestens die in den Aufnahmeraum für die Kondensatorzelle austretenden Anschlußleitungen aus einem Ventilmetall bestehen, dadurch gekennzeichnet, daß die aus einem Ventilmetall bestehenden Anschlußleitungen (6,7) mindestens im Bereich ihrer in den schalenförmigen Gehäuseteil (1) eingebetteten Abschnitte (14,15) mindestens teilweise an ihrer Oberfläche mit einer sie umfangsseitig umfassenden Sperrschicht (39) versehen sind.

7. Elektrolytkondensator nach Anspruch 6, dadurch gekennzeichnet, daß die Sperrspannung der Sperrschicht (39) höher gewählt ist als die Spannung, mit der die Kondensatorzelle entsprechend ihrer Betriebsspannung formiert wird.

8. Elektrolytkondensator nach einem der vorhergehenden Ansprüche, dadurch gekennzeichnet, daß die Anschlußleitungen (6,7) mindestens im wesentlichen im Bereich ihrer in den schalenförmigen Gehäuseteil (1) eingebetteten Abschnitte (14,15) von mindestens einem an den Anschlußleitungen fest haftenden, sie umfangsseitig ringförmig umfassenden, aus einem Kunstharz bestehenden Dichtungselement (40;41) umgeben sind.

9. Elektrolytkondensator nach Anspruch 8, dadurch gekennzeichnet, daß das Dichtungselement (40;41) aus einem wärmebeständigen, elastisch nachgiebigen Kunstharz besteht.

10. Elektrolytkondensator nach Anspruch 8 oder 9, dadurch gekennzeichnet, daß mindestens ein eine Anschlußleitung (6,7) umgebendes Dichtungselement (40) vollständig in den schalenförmigen Gehäuseteil eingebettet 1 ist.

11. Elektrolytkondensator nach Anspruch 8 oder 9, dadurch gekennzeichnet, daß mindestens ein eine Anschlußleitung (6,7) umgebendes Dichtungselement (41) unmittelbar anschließend an den in den schalenförmigen Gehäuseteil (1) eingebetteten Abschnitt (14,15) der Anschlußleitung, an mindestens einer ihrer beiden Austrittsstellen aus dem schalenförmigen Gehäuseteil, an denselben angrenzend, angeordnet ist.

12. Verfahren zur Herstellung eines Elektrolytkondensators nach einem der vorhergehenden Ansprüche, bei dem in die Seitenwände (4,5) eines schalenförmig ausgebildeten Gehäuseteiles (1) von außerhalb desselben kommende Anschlußleitungen (6,7) eingebettet werden, von denen ein Ende in den für eine Kondensatorzelle (18) bestimmten Aufnahmeraum austritt, wonach die mit seitlichen Elektrodenanschlüssen (22,23) versehene Kondensatorzelle mit diesen Elektrodenanschlüssen benachbart zu den in den für die Kondensatorzelle bestimmten Aufnahmeraum austretenden Enden (11,12) der Anschlußleitungen in den schalenförmigen Gehäuseteil eingesetzt wird und die Elektrodenanschlüsse mit diesen Enden der Anschlußleitungen verbunden werden und anschließend ein deckelförmiger Gehäuseteil (26) auf den schalenförmigen Gehäuseteil (1) aufgesetzt und dichtend mit diesem verbunden wird, dadurch gekennzeichnet, daß die Anschlußleitungen (6,7) mindestens abschnittsweise, in Richtung vom Boden (2) des schalenförmigen Gehäuseteiles weg, im wesentlichen parallel zu dessen Seitenwänden (4,5) verlaufend in dieselben eingebettet werden, daß dabei ihre in den für die Kondensatorzelle (18) bestimmten Aufnahmeraum austretenden Enden (11,12) so lang ausgebildet sind, daß sie im wesentlichen parallel zu den Seitenwänden verlaufend bis über den schalenförmigen Gehäuseteil hinausragen, daß danach die Kondensatorzelle mit ihren seitlichen, parallel zur Kondensatorzelle verlaufend abgewinkelten Elektrodenanschlüssen (22,23) in den schalenförmigen Gehäuseteil eingesetzt wird, wonach ihre Elektrodenanschlüsse außerhalb des schalenförmigen Gehäuseteiles im Bereich der über den schalenförmigen Gehäuseteil hinausragenden Enden der Anschlußleitungen mit diesen verbunden werden, und daß anschließend diese über den schalenförmigen Gehäuseteil hinausragenden Enden der Anschlußleitungen zusammen mit den mit ihnen verbundenen Elektrodenanschlüssen der Kondensatorzelle zu der vom Boden des schalenförmigen Gehäuseteiles abgewandten Fläche der Kondensatorzelle hin L-förmig abgewinkelt werden, ohne sich dabei gegenseitig zu kontaktieren, und an die vom Boden des schalenförmigen Gehäuseteiles abgewandte Fläche der Kondensatorzelle angedrückt werden und so die Kondensatorzelle an den Boden des schalenförmigen Gehäuseteiles angedrückt gehalten wird wonach auf den schalenförmigen Gehäuseteil der deckelförmige Gehäuseteil (26) aufgesetzt und die beiden Gehäuseteile dichtend miteinander verbunden werden.

## Claims

1. Electrolytic capacitor having a synthetic resin housing which forms a receiving space for a capacitor cell (18) and which consists of a dish-shaped housing section (1) which largely accommodates the capacitor cell (18) having lateral electrode connections (22, 23), and a lid-shaped housing section (26) which hermetically seals said dish-shaped housing section (1), connecting leads (6, 7) being embedded in the side walls (4, 5) of the dish-shaped housing section (1) which are adjacent to the electrode connections (22, 23) of the capacitor cell (18), said leads, which are connected with one end (11, 12) to the adjacent electrode connection (22, 23) of the capacitor cell (18), and at least one portion of which extends in the direction away from the base (2) of the dish-shaped housing section (1), extend from the exterior of the dish-shaped housing section (1), and substantially parallel to the capacitor cell (18), the ends (11, 12) of the connecting leads (6, 7) which emerge into the receiving space for the capacitor cell (18) and are connected to the adjacent electrode connections (22, 23) of the capacitor cell (18) being angled in an L-shape towards the surface of the capacitor cell (18) remote from the base (2) of the dish-shaped housing section without making contact with each other, characterized in that the L-shaped ends (11, 12) of the connecting leads (6, 7) folded towards the capacitor cell (18) and the electrode connections (22, 23) connected to said ends bear on the capacitor cell (18) so as to urge said cell against the base (2) of the dish-shaped section (1).

2. Electrolytic capacitor as claimed in Claim 1, characterized in that the connecting leads (6, 7) have at least one bend (30) in their portions (14, 15) embedded in the dish-shaped housing section (1).

3. Electrolytic capacitor as claimed in Claim 2, characterized int hat in the region of the base (2) of the dish-shaped housing section (1) the connecting leads (6, 7) have a bend (30) essentially formed as an angulate portion which emerges from the exterior side wall of the dish-shaped housing section (1).

4. Electrolytic capacitor as claimed in any one of the preceding Claims, in which the connecting leads are strip-shaped, characterized in that in the region of their portions (14, 15) embedded in the dish-shaped housing section (1), the connecting leads (6, 7) are provided, with at least one cutout (32, 33, 34) which extends transversely to the main surface of the strip and which reduces the cross-sectional area of the connecting leads.

5. Electrolytic capacitor as claimed in any one of the preceding Claims, in which the connecting leads are strip-shaped, characterized in that in the region of their portions (14, 15) embedded in the dish-shaped housing section (1), the connecting leads (6, 7) are provided, with at least one indentation (35) which extends transversely to the main surface of the strip.

6. Electrolytic capacitor as claimed in any one of the preceding Claims, in which at least the connecting leads emerging into the receiving space for the capacitor cell are made of a valve metal, characterized in that at least in the region of their portions (14, 15) embedded in the dish-shaped housing section (1), the valve metal connecting leads (6, 7) are covered with a barrier layer (39) surrounding said leads over at least part of their length.

7. Electrolytic capacitor as claimed in Claim 6, characterized in that the barrier voltage of the barrier layer (39) is selected to be higher than the forming voltage applied to the capacitor cell in order to obtain the required voltage rating.

8. Electrolytic capacitor as claimed in any one of the preceding Claims, characterized in that at least essentially in the region of their portions (14, 15) embedded in the dish-shaped housing sections (1) the connecting leads (6, 7) are surrounded by at least one annular, synthetic resin sealing element (40, 41) adhering firmly to the connecting leads.

9. Electrolytic capacitor as claimed in Claim 8, characterized in that the sealing element (40, 41) is made of a heat-resistant elastically compliant synthetic resin.

10. Electrolytic capacitor as claimed in Claim 8 or 9, characterized in that at least one sealing element (40) surrounding a connecting lead (6, 7) is completely embedded in the dish-shaped housing section (1).

11. Electrolytic capacitor as claimed in Claim 8 or 9, characterized in that at least one sealing element (41) surrounding a connecting lead (6, 7) directly adjoins the portion (14, 15) of the connecting lead embedded in the dish-shaped housing section (1) at one or at both points where said portion emerges from the dish-shaped housing section.

12. Method of manufacturing an electrolytic capacitor as claimed in any one of the preceding Claims, in which connecting leads (6, 7) from outside a dish-shaped housing section (1) are embedded in the side walls (4, 5) of said housing section, one end of said connecting leads emerges into a receiving space for a capacitor cell (18) having lateral electrode connections (22, 23), after which the capacitor cell, is inserted into the dish-shaped housing section in such a way that said electrode connections are situated adjacent to the ends (11, 12) of the connecting leads emerging into the receiving space for the capacitor cell and the electrode connections are connected to said ends of the connecting leads, and subsequently a lid-shaped housing section (26) is placed on the dish-shaped housing section (1) and hermetically joined to the latter, characterized in that at least portions of the connecting leads (6, 7) which extend essentially parallel to the side walls (4, 5) walls of the dish-shaped housing section and, away from the base (2) of the dish-shaped housing section are embedded in the side walls in that their ends (11, 12) emerging into the receiving space for the capacitor cell (18) have such a length that they project beyond the dish-shaped housing section, in that the capacitor cell is then inserted into the dish-shaped housing section with its lateral electrode connections (22, 25) folded to extend parallel to the lateral surfaces of the capacitor cell, after which its electrode connections outside the dish-shaped housing section are connected to the ends of the connecting leads which project from the dish-shaped housing section, and in that, subsequently, said ends of the connecting leads projecting from the dish-shaped section are folded, together with the electrode connections of the capacitor cell connected thereto towards the surface of the capacitor cell remote from the base of the dish-shaped housing section so as to obtain L-shaped ends which do not contact each other, and said ends are pressed against the surface of the capacitor cell which is remote from the base of the dish-shaped housing section so as to urge the capacitor cell against the base of the dish-shaped housing section after which the lid-shaped housing section is placed on the dish-shaped housing section and the two housing sections are hermetically joined to each other.

## Revendications

1. Condensateur électrolytique muni d'un boîtier en matière synthétique constituant une enceinte de réception pour une cellule de condensateur (18), boîtier qui est constitué par une partie de boîtier en forme de cuvette (1) recevant essentiellement la cellule de condensateur (18) présentant des raccords d'électrode latéraux (22, 23) et une partie de boîtier en forme de couvercle (26) fermant de façon étanche la partie de boîtier en forme de cuvette (1), alors que dans les parois latérales (4, 5) de la partie de boîtier en forme de cuvette (1) voisines des raccords d'électrode (22, 23) de la cellule de condensateur (18) sont noyées des lignes de raccordement (6, 7) qui, provenant de l'extérieur de la partie de boîtier (1) en forme de cuvette, sont connectées par une extrémité (11, 12) au raccord d'électrode voisin (22, 23) de la cellule de condensateur (18) et qui s'étendent, au moins par sections, à partir du fond (2) de la partie de boîtier en forme de cuvette (1), essentiellement parallèlement à la cellule de condensateur (18), alors que les extrémités (11, 12) des lignes de raccordement (6, 7) reliées aux raccords d'électrode voisins de la cellule de condensateur (18) et sortant dans l'enceinte de réception pour la cellule de condensateur (18) sont coudées en L vers la surface de la cellule de condensateur (22, 23) s'écartant du fond (2) de la partie de boîtier en forme de cuvette (1) sans provoquer des contacts mutuels, caractérisé en ce que les extrémités (11, 12) des lignes de raccordement (6, 7) coudées en forme de L vers la cellule de condensateur (18) s'appliquent, ensemble avec les raccords d'électrode (22, 23) y reliés contre la cellule de condensateur (18) et la presse contre le fond 2 de la partie de boîtier en forme de cuvette (1).

2. Condensateur électrolytique selon la revendication 1, caractérisé en ce que dans la zone de leur tronçon (14, 15) noyé dans la partie de boîtier en forme de cuvette (1), les lignes de raccordement (6, 7) présentent au moins une courbure (30) dans leur cours.

3. Condensateur électrolytique selon la revendication 2, caractérisé en ce que dans la zone du fond (2) de la partie de boîtier en forme de cuvette (1), les lignes de raccordement (6, 7) présentent une courbure (30) qui est pratiquement sous forme de coude, tronçon coudé par lequel ladite ligne de raccordement (6, 7) sort de la paroi latérale (4, 5) de la partie de boîtier en forme de cuvette à la face extérieure (16, 17) de cette dernière.

4. Condensateur électrolytique selon l'une des revendications précédentes présentant des lignes de raccordement en forme de bande, caractérisé dans la zone de leurs tronçons (14, 15) noyés dans la partie de boîtier en forme de cuvette (1), les lignes de raccordement (6, 7) sont munies d'au moins un évidement (32, 33, 34) s'étendant transversalement au plan de la bande et réduisant dans leur zone la surface de section des lignes de raccordement.

5. Condensateur électrolytique selon l'une des revendications précédentes présentant des lignes de raccordement en forme de bande, caractérisé en ce que dans la zone de leurs tronçons (14, 15) noyés dans la partie de boîtier en forme de cuvette (1), les lignes de raccordement (6, 7) sont munies d'au moins une cavité s'étendant transversalement au plan de la bande.

6. Condensateur électrolytique selon l'une des revendications précédentes, dans lequel au moins les lignes de raccordement sortant dans l'enceinte de réception destinée à la cellule de condensateur sont constituées par un métal de valve, caractérisé en ce qu'au moins dans la zone de leurs tronçons (14, 15) noyés dans la partie de boîtier en forme de cuvette (1), les lignes de raccordement (6, 7) constituées par un métal de valve sont munies, au moins partiellement, à leur surface d'une couche de blocage (39) qui l'entoure de façon circonférentielle.

7. Condensateur électrolytique selon la revendication 6, caractérisé en ce que la tension de blocage de la couche de blocage (39) est choisie supérieure à la tension avec laquelle est formée la cellule de condensateur conformément à sa tension de fonctionnement.

8. Condensateur électrolytique selon l'une des revendications précédentes, caractérisé en ce qu'au moins essentiellement dans la zone de leurs tronçons (14, 15) noyés dans la partie de boîtier en forme de cuvette (1), les lignes de raccordement (6, 7) sont entourées d'au moins un élément d'étanchement (40, 41) constitué par une résine synthétique, adhérant convenablement aux lignes de raccordement et les entourant d'une façon annulaire circonférentielle.

9. Condensateur électrolytique selon la revendication 8, caractérisé en ce que l'élément d'étanchement (40, 41) est constitué par une résine synthétique élastiquement déformable, résistant à la chaleur.

10. Condensateur électrolytique selon la revendication 8 ou 9, caractérisé en ce qu'un au moins un élément d'étanchement (40) entourant une ligne de raccordement (6, 7) est complètement noyé dans la partie de boîtier en forme de cuvette.

11. Condensateur électrolytique selon la revendication 8 ou 9, caractérisé en ce qu'au moins un élément d'étanchement (41) entourant une ligne de raccordement (6, 7) est disposé de façon à avoisiner la partie de boîtier en forme de cuvette et à se raccorder immédiatement au tronçon (14, 15) de la ligne de raccordement noyé dans la partie de boîtier en forme de cuvette (1) à au moins un de leurs deux endroits de sortie de la partie de boîtier en forme de cuvette.

12. Procédé pour la fabrication d'un condensateur électrolytique selon l'une des revendications précédentes, selon lequel des lignes de raccordement (6, 7) provenant de l'extérieur sont noyées dans les parois latérales (4, 5) d'une partie de boîtier (1) en forme de cuvette, une extrémité desdites lignes de raccordement sortant dans l'enceinte de réception destinée à la cellule de condensateur (18), après quoi la cellule de condensateur munie de raccords d'électrode latéraux (22, 23) est introduite dans la partie de boîtier en forme de cuvette de façon que les raccords d'électrode avoisinent les extrémités (11, 12) des lignes de raccordement sortant dans l'enceinte de réception destinée à la cellule de condensateur et les raccords d'électrode sont reliés à ces extrémités des lignes de raccordement et ensuite une partie de boîtier en forme de couvercle (26) est posée sur la partie de boîtier (1) en forme de cuvette et reliée d'une façon étanche à cette dernière, caractérisé en ce qu'à partir du fond (2) de la partie de boîtier en forme de cuvette, les lignes de raccordement (6, 7) s'étendent, au moins par sections, essentiellement parallèlement aux parois latérales (4, 5) de ladite partie de boîtier dans ces dernières, que leurs extrémités (11, 12) sortant dans l'enceinte de réception destinée à la cellule de condensateur (18) sont formées de façon que, tout en s'étendant essentiellement parallèlement aux parois latérales, elles dépassent la partie de boîtier en forme de cuvette, qu'ensuite la cellule de condensateur présentant ses raccords d'électrode latéraux (22, 23) coudés s'étendant parallèlement à la cellule de condensateur, est introduite dans la partie de boîtier en forme de cuvette, après quoi, à l'extérieur de la partie de boîtier en forme de cuvette, dans la zone des extrémités des lignes de raccordement dépassant la partie de boîtier en forme de cuvette, les raccords d'électrode sont reliés aux lignes de raccordement et qu'ensuite lesdites extrémités des lignes de raccordement dépassant la partie de boîtier en forme de cuvette, ensemble avec les raccords d'électrode y reliés de la cellule de condensateur sont coudés en L vers la surface de la cellule d'électrode s'écartant du fond de la partie de boîtier (26) en forme de cuvette sans provoquer des contacts mutuels et appliqués par la surface de la cellule de condensateur s'écartant du fond de la partie de boîtier en forme de cuvette et qu'ainsi la cellule de condensateur est maintenue appliquée au fond de la partie de boîtier en forme de cuvette.
